# FASCICULE DE BREVET EUROPEEN

(11) **EP 4 082 916 B1**
(45) Date de publication et mention de la délivrance du brevet: **01.05.2024**
(21) Numéro de dépôt: 22159632.3
(22) Date de dépôt: 02.03.2022
(51) Int. Cl.: B64D 35/08

(54) **AERONEF EQUIPE D'UN SYSTEME DE TRANSMISSION**
LUFTFAHRZEUG, DAS MIT EINEM ÜBERTRAGUNGSSYSTEM AUSGESTATTET IST
AIRCRAFT PROVIDED WITH A TRANSMISSION SYSTEM

(30) Priorité: 30.04.2021 FR 2104550
(43) Date de publication de la demande: 02.11.2022
(73) Titulaire: Airbus Helicopters, 13725 Marignane Cedex (FR)
(72) Inventeur: MARIOTTO, Damien, 13100 Aix-en-Provence (FR)
(74) Mandataire: GPI Brevets

(56) Documents cités:
- EP-A1- 2 148 066
- DE-A1- 19 941 705
- FR-A1- 3 102 143

## Description

La présente invention se rapporte au domaine des aéronefs comportant au moins un rotor participant à la propulsion et/ou à la sustentation de l'aéronef dans l'air. Un aéronef peut en effet comporter un rotor ou plusieurs rotors comportant au moins une pale. Chaque rotor peut notamment être agencé au niveau d'un mât rotor et être monté sur un support fixe ou mobile par rapport à un fuselage ou châssis dudit aéronef.

On désigne par l'expression rotor également une hélice propulsive ou tractive participant dans ce cas uniquement à la propulsion ou à la traction de l'aéronef.

Par suite, le terme aéronef peut désigner un avion muni d'au moins une hélice tractive, un giravion et par exemple un hélicoptère, un hélicoptère hybride comprenant un rotor participant à la propulsion et/ou à la sustentation et au moins un rotor de type hélice, un aéronef comportant des rotors basculants également connu sous l'expression anglaise « tiltrotor » ou encore un aéronef comportant plusieurs rotors tournants autour d'axes de rotation orientés sensiblement verticalement lorsque cet aéronef est posé sur un sol horizontal.

En outre, l'aéronef peut embarquer au moins un pilote ou aucun pilote. L'aéronef peut permettre d'embarquer au moins un passager ou aucun passager. Un tel aéronef peut permettre de transporter des marchandises ou de réaliser des missions de reconnaissance ou de surveillance et embarquer par exemple une caméra.

Par ailleurs, au moins un rotor équipant cet aéronef peut être entraîné en rotation exclusivement, ou non exclusivement, au moyen d'une machine électrique générant un couple moteur. Dans ce cas, la machine électrique fonctionne en mode moteur.

En outre, dans certaines phases de vol de l'aéronef, la machine électrique peut ne pas entraîner le rotor, voire la machine électrique peut être entraînée par le rotor et freiner le rotor pour produire de l'électricité. Ainsi, la machine électrique fonctionne alors en mode générateur et le rotor, entraîné en rotation par l'inertie du rotor et un flux d'air, permet de générer un couple générateur qui est absorbé par la machine électrique.

De même, au moins un moteur thermique équipant cet aéronef peut être entraîné en rotation et permettre son démarrage, au moyen d'une machine électrique générant un couple moteur. Dans ce cas, la machine électrique peut être un démarreur électrique et fonctionne en mode moteur. Le moteur thermique peut être par exemple un moteur à pistons ou un turbomoteur comportant un générateur de gaz.

Dans les phases de vol de l'aéronef, la machine électrique n'entraîne pas le moteur thermique, au contraire c'est le moteur thermique qui entraîne la machine électrique de manière à produire de l'électricité. Ainsi, la machine électrique fonctionne alors en mode générateur et le moteur thermique permet de générer un couple générateur qui est absorbé par la machine électrique.

En outre, il est connu d'utiliser une roue libre pour désynchroniser une machine électrique avec un rotor ou un moteur thermique par exemple lors d'un démarrage réalisé au moyen d'une machine électrique fonctionnant en mode moteur ou en cas d'une défaillance de la machine électrique.

Une roue libre est usuellement munie d'une partie menante, d'une partie menée, et d'un système de liaison en rotation pour lier en rotation la partie menante et le partie menée dans des conditions particulières.

A l'arrêt ou tant que la partie menée tourne plus vite que la partie menante autour d'un axe de rotation, la roue libre est dans un mode de fonctionnement dénommé « désynchronisé » ou « désengagé » par commodité. La partie menante ne transmet pas de couple moteur à la partie menée et inversement. La partie menée et la partie menante sont désolidarisées en rotation autour de l'axe de rotation. Dans ce mode de fonctionnement désengagé, la partie menée et la partie menante présentent l'une par rapport à l'autre un degré de liberté en rotation autour de l'axe de rotation.

Par contre, dans un mode de fonctionnement dénommé « synchronisé » ou « engagé », la partie menante et la partie menée tournent à la même vitesse et conjointement autour de l'axe de rotation.

Pour passer d'un mode de fonctionnement à un autre, la roue libre est munie d'au moins un organe de liaison interposé entre la partie menante et la partie menée. L'organe de liaison lie en rotation la partie menante et la partie menée dans le mode de fonctionnement engagé. Dans ce mode de fonctionnement engagé, l'organe de liaison permet de supprimer le degré de liberté en rotation précédemment évoqué entre la partie menante et le partie menée.

L'organe de liaison peut par exemple comporter une bille, un galet ou un cliquet.

En outre, la partie menante peut être formée par une bague intérieure montée sur un premier arbre et/ou la partie menée peut être formée par une bague extérieure montée sur un deuxième arbre.

Alternativement, la partie menante peut être formée directement par un premier arbre et/ou la partie menée peut être formée directement par un deuxième arbre.

Une telle utilisation d'une roue libre est notamment décrite dans le document FR 3 090 576. Un tel document divulgue ainsi une machine électrique connectée à une boîte de transmission de puissance. Une roue libre est interposée entre la machine électrique et la boîte de transmission de puissance. En cas de panne d'un moteur thermique, la machine électrique peut alors fournir un couple moteur au rotor.

En outre, un système d'aide à la synchronisation de roue libre peut être utilisé pour effectuer une synchronisation entre la partie menante et la partie menée de la roue libre.

Cependant, une telle roue libre ne peut transmettre un couple moteur que dans un seul mode de fonctionnement de la machine électrique à savoir dans le mode de fonctionnement moteur ou dans le mode de fonctionnement générateur.

Alternativement, un dispositif de solidarisation en rotation débrayable, tel un embrayage, peut quant à lui, dans un état embrayé, permettre la transmission d'un couple moteur à la fois dans le mode de fonctionnement moteur et dans le mode de fonctionnement générateur de la machine électrique et, dans un état débrayé, ne pas permettre ou stopper la transmission d'un couple moteur à la fois dans le mode de fonctionnement moteur et dans le mode de fonctionnement générateur de la machine électrique.

Cependant, un embrayage est un organe très lourd et présente un encombrement important le rendant incompatible avec certains types d'aéronefs. De plus, un embrayage comporte des pièces d'usure qu'il faut remplacer régulièrement et nécessitant des opérations de maintenance complexes et coûteuses.

Enfin et selon une autre alternative, il est également connu d'utiliser des pièces comportant une portion fusible ou une « section à casser » permettant de stopper la transmission d'un couple moteur lorsque celui-ci dépasse une valeur prédéterminée.

Cependant, dans ce cas, la rupture de la portion fusible est alors irréversible et la pièce comportant cette portion fusible doit être remplacée pour permettre une utilisation ultérieure de l'aéronef.

Par ailleurs, le document FR 3 102 143 A1 présente quant à lui un système propulsif pour un hélicoptère comportant un turbomoteur à turbine liée et une machine électrique apte à fonctionner en tant que moteur électrique, le turbomoteur et la machine électrique étant aptes à entraîner en rotation au moins un rotor principal destiné à être couplé à une voilure tournante.

En outre, des moyens de couplage et de découplage 14 en rotation sont agencés entre la machine électrique et le turbomoteur. La figure 6 illustre des moyens de couplage et de découplage 14 présentant une première roue libre 20 autorisant un passage d'un premier couple d'un premier arbre relié à un rotor 2a du turbomoteur 2 vers un second arbre relié au reste du système propulsif, en particulier à un réducteur 13, et une seconde roue libre 21 autorisant un passage d'un second couple du second arbre vers le premier arbre, la seconde roue libre 21 étant associée à un organe frangible 22 apte à se rompre lorsque le second couple dépasse une valeur seuil.

Ainsi, dans un cas de fonctionnement normal, le couple peut être transmis du turbomoteur 2, vers le rotor principal 5 ou vers le rotor anti-couple 7, au travers de la première roue libre 20. En cas de panne, le rotor 2a du turbomoteur 2 crée un couple résistant dû à un dysfonctionnement voire un blocage du rotor 2a, entraînant un passage du couple au travers de la seconde roue libre 21. Si ce couple résistant est trop élevé, alors l'organe frangible 22 est rompu, entraînant un découplage du turbomoteur 2 par rapport au reste du système de propulsion 1.

Dés lors, le document FR 3 102 143 A1 décrit l'utilisation de deux roues libres agencées en opposition de phase entre une machine électrique et un moteur thermique.

Cependant, il ne divulgue pas deux roues libres agencées en opposition de phase entre la machine électrique et un rotor.

Par ailleurs, le document DE 199 41 705 A1 divulgue quant à lui, notamment à la figure 2, un assemblage mécanique comportant deux roues libres 120, 122 agencées en opposition de phase entre un arbre 112 d'un moteur électrique et une manivelle porte-satellites 117.

Cependant, un tel assemblage ne se rapporte pas au domaine technique des aéronefs. Ainsi, un tel assemblage ne comporte pas deux roues libres agencées en opposition de phase entre un moteur électrique et un rotor de sustentation.

La présente invention a alors pour objet de proposer d'équiper un aéronef avec un système de transmission d'un couple moteur permettant de s'affranchir des limitations mentionnées ci-dessus. En outre, un tel système de transmission est utilisé dans le mode de fonctionnement moteur et dans le mode de fonctionnement générateur de la machine électrique. Un tel système est léger, peu encombrant et ne requiert pas d'opération de maintenance régulière. Il présente également l'avantage d'être réversible.

L'invention se rapporte donc à un aéronef comportant au moins une machine électrique et au moins un rotor participant à une sustentation et/ou à une propulsion de l'aéronef dans l'air, l'aéronef comportant un système de transmission d'une part d'un couple moteur d'un arbre primaire d'au moins une machine électrique fonctionnant en mode moteur vers un arbre secondaire et alternativement d'autre part d'un couple générateur de l'arbre secondaire vers l'arbre primaire de la au moins une machine électrique fonctionnant en mode générateur.

Selon l'invention, un tel aéronef est remarquable en ce que l'arbre secondaire est solidaire en rotation du au moins un rotor et en ce que le système comporte deux roues libres agencées en opposition de phase, les deux roues libres présentant :
- une roue libre moteur, la roue libre moteur comportant une partie menante moteur solidaire en rotation avec l'arbre primaire et une partie menée solidaire en rotation avec l'arbre secondaire, la roue libre moteur transmettant exclusivement le couple moteur de l'arbre primaire vers l'arbre secondaire, et
- une roue libre générateur, la roue libre générateur comportant une partie menante générateur solidaire en rotation avec l'arbre secondaire et une partie menée générateur solidaire en rotation avec l'arbre primaire, la roue libre générateur transmettant exclusivement le couple générateur de l'arbre secondaire vers l'arbre primaire.

En outre, un tel système permet alors d'utiliser, par exemple, une machine électrique comportant des aimants permanents et étant dépourvue de balais. Le rotor comprenant des aimants permanents peut en effet éventuellement générer un couple résistif freinant l'arbre primaire et l'arbre secondaire, voire provoquer un blocage électromagnétique ou mécanique de l'arbre primaire et de l'arbre secondaire.

Il est alors avantageux d'utiliser un système de transmission d'un couple moteur comportant une roue libre moteur pouvant passer de l'état synchronisé à l'état désynchronisé.

De même, lorsque la machine électrique fonctionne en mode générateur, l'état désynchronisé de la roue libre générateur permet à l'arbre secondaire de pouvoir tourner librement et par conséquent de ne pas être entraîné en rotation par l'arbre primaire de la au moins une machine électrique si un différentiel de vitesse de rotation existe entre la partie menée générateur et la partie menante générateur.

En outre l'arbre secondaire est donc solidaire en rotation d'un ou plusieurs rotors permettant la sustentation et/ou la propulsion d'un aéronef tel un giravion, d'une ou plusieurs hélices propulsives ou tractives.

Autrement dit, la machine électrique fonctionnant en mode moteur permet alors de générer l'énergie cinétique pour entraîner en rotation le ou les rotors durant une phase de vol de l'aéronef.

Par ailleurs, l'expression « agencées en opposition de phase » concernant la roue libre moteur et la roue libre générateur signifie que la partie menante moteur et la partie menée générateur sont solidaires en rotation l'une de l'autre et que la partie menée moteur et la partie menante générateur sont solidaires en rotation l'une de l'autre.

Par exemple, la partie menante moteur et la partie menée générateur peuvent être reliées entre elles par un organe de liaison. Dans ce cas, la partie menante moteur et la partie menée générateur peuvent être formées par deux pièces disjointes l'une de l'autre.

Selon un autre exemple, la partie menante moteur et la partie menée générateur peuvent former un premier ensemble monolithique. Un tel premier ensemble monolithique peut ainsi présenter une bague intérieure munie de deux pistes, à savoir une piste menante et une piste menée.

Par analogie, la partie menante générateur et la partie menée moteur peuvent être reliées entre elles par un organe de liaison. Dans ce cas, la partie menante générateur et la partie menée moteur peuvent être formées par deux pièces disjointes l'une de l'autre.

Selon un autre exemple, la partie menante générateur et la partie menée moteur peuvent former un second ensemble monolithique. Ce second ensemble monolithique peut ainsi présenter une bague extérieure munie de deux pistes, à savoir une piste menante et une piste menée.

Suivant une chaîne cinématique de transmission d'un couple moteur, la roue libre moteur est de préférence agencée entre la machine électrique et la roue libre générateur. De cette manière, un couple maximal et des charges importantes peuvent être fournis en premier à cette roue libre moteur par la ou les machines électriques fonctionnant en mode moteur.

En outre, de telles roues libres moteur et générateur sont avantageusement guidées en rotation au moyen de paliers de guidage tels des roulements à billes ou à rouleaux par exemple. Les roues libres moteur et générateur sont également avantageusement lubrifiées par un système de lubrification à huile, par barbotage dans un bain d'huile ou par graissage. De même, les paliers de guidage peuvent être lubrifiés par le même système de lubrification à huile, par barbotage dans le même bain d'huile ou par un graissage indépendant.

Avantageusement, le système peut comporter un dispositif de transmission générateur transmettant le couple générateur de l'arbre secondaire vers la partie menante générateur.

Un tel dispositif de transmission générateur peut notamment comporter un arbre de transmission, un mât rotor, un cardan, un organe démultiplicateur de vitesse de rotation, un renvoi d'angle... Un tel dispositif transmission générateur est ainsi agencé entre l'arbre secondaire et la roue libre générateur.

En pratique, le dispositif de transmission générateur peut comporter une portion fusible générateur, la portion fusible générateur présentant une limite à la rupture générateur prédéterminée.

Une telle portion fusible générateur peut également être appelée « section à casser » car elle présente une section dont la limite à la rupture est la plus faible par rapport aux limites à la rupture de toutes les autres sections du dispositif de transmission générateur.

Lorsque le couple générateur transmis par l'arbre secondaire au dispositif de transmission générateur dépasse le couple maximal admissible de la portion fusible générateur, alors la portion fusible générateur casse et la partie menante de la roue libre générateur n'est plus entraînée en rotation par l'arbre secondaire.

Selon un premier exemple de réalisation de l'invention, la portion fusible générateur peut comporter un élément axial générateur, la limite à la rupture générateur prédéterminée correspondant à une limite à la rupture en torsion de l'élément axial générateur.

Selon un second exemple de réalisation de l'invention, la portion fusible générateur peut comporter au moins un élément radial générateur, la limite à la rupture générateur prédéterminée correspondant à une limite à la rupture en cisaillement du ou des éléments radiaux générateur.

Avantageusement, le système peut comporter un dispositif de transmission moteur transmettant le couple moteur de la partie menée moteur vers l'arbre secondaire.

Comme précédemment, un tel dispositif transmission moteur peut notamment comporter un arbre de transmission, un mât rotor, un cardan, un organe démultiplicateur de vitesse de rotation, un renvoi d'angle... Un tel dispositif transmission générateur est ainsi agencé entre la roue libre moteur et l'arbre secondaire.

En pratique, le dispositif de transmission moteur peut comporter une portion fusible moteur, la portion fusible moteur présentant une limite à la rupture moteur prédéterminée.

Comme précédemment, cette portion fusible moteur peut également être appelée « section à casser » car elle présente une section dont la limite à la rupture est la plus faible par rapport aux limites à la rupture de toutes les autres sections du dispositif de transmission moteur.

En outre, la limite à la rupture moteur prédéterminée de la portion fusible moteur peut être avantageusement choisie supérieure à la limite à la rupture générateur prédéterminée de la portion fusible générateur car le couple moteur transmis de l'arbre primaire de la machine électrique fonctionnant en mode moteur à l'arbre secondaire est supérieur au couple générateur transmis de l'arbre secondaire à l'arbre primaire de la machine électrique fonctionnant en mode générateur.

Selon une première variante de dispositif de transmission moteur, la portion fusible moteur peut comporter un élément axial moteur, la limite à la rupture moteur prédéterminée correspondant à une limite à la rupture en torsion de l'élément axial moteur.

Selon une seconde variante de dispositif de transmission moteur, la portion fusible moteur peut comporter au moins un élément radial moteur, la limite à la rupture moteur prédéterminée correspondant à une limite à la rupture en cisaillement du ou des éléments radiaux moteur.

En outre selon un autre exemple compatible avec les précédents, le système peut comporter un dispositif de transmission générateur transmettant le couple générateur de l'arbre secondaire vers la partie menante générateur et un dispositif de transmission moteur transmettant le couple moteur de la partie menée moteur vers l'arbre secondaire, le dispositif de transmission générateur étant solidaire en rotation avec le dispositif de transmission moteur.

Par suite, le dispositif transmission moteur et le dispositif transmission générateur peuvent comporter un ou plusieurs éléments en commun tels que par exemple un arbre de transmission ou un mât rotor.

Avantageusement dans ce cas, le dispositif de transmission générateur peut comporter une portion fusible générateur et le dispositif de transmission moteur peur comporter une portion fusible moteur, la portion fusible moteur étant interposée entre l'arbre secondaire et la portion fusible générateur.

Un tel agencement des portions fusibles moteur et générateur fournit alors une sécurité supplémentaire en cas de blocage éventuel d'une des roues libres moteur et/ou générateur combiné à un blocage électromagnétique et/ou mécanique de la machine électrique. Un tel blocage génère alors un couple résistant dépassant le couple générateur et pouvant alors provoquer une rupture de la portion fusible moteur par laquelle passe le couple moteur lorsque la machine électrique fonctionne en mode moteur.

Avantageusement, l'aéronef peut comporter un système de commande commandant un couple de freinage de la machine électrique.

Un tel système commande peut notamment intégrer des moyens de sécurité pour empêcher une commande accidentelle du couple de freinage. En outre, une tel couple de freinage peut être généré de manière mécanique ou encore électromagnétique et peut consister en la différence entre le couple moteur et le couple générateur.

Ce système de commande permet alors de fournir une protection en cas de panne telle que par exemple un échauffement anormal. Le système de commande permet alors par exemple de générer un ordre de commande forçant la fermeture des transistors de l'électronique de puissance de la machine électrique afin de créer un couple résistant important provoqué par un court-circuitage de toutes les phases de la machine électrique générant le couple de freinage de l'arbre primaire par la génération d'un court-circuit de la machine électrique fonctionnant en mode générateur.

En outre, la roue libre générateur pouvant comporter une partie menante générateur solidaire en rotation avec un dispositif de transmission générateur transmettant le couple générateur de l'arbre secondaire vers la partie menante générateur, le dispositif de transmission générateur pouvant comporter une portion fusible générateur, le couple de freinage de l'arbre primaire de la machine électrique peut générer une rupture de la portion fusible générateur.

De cette manière, un tel système de commande permet alors libérer la cinématique de rotation de l'arbre secondaire vis-à-vis de l'arbre primaire en réalisant une rupture de la portion fusible générateur.

Selon un exemple de réalisation, l'aéronef peut comporter au moins un senseur pour détecter une panne de l'aéronef, le senseur étant relié au système de commande pour commander automatiquement le couple de freinage de la machine électrique. En outre, un tel senseur peut par exemple permettre d'identifier une défaillance ou tout fonctionnement anormal de la machine électrique.

Selon un autre exemple compatible avec le précédent, l'aéronef peut comporter au moins un organe de commande pour générer une consigne de commande, le au moins un organe de commande étant actionné manuellement par un pilote de l'aéronef et étant relié au système de commande pour commander manuellement le couple de freinage de la machine électrique.

Ce ou ces organes de commande peut notamment comporter des moyens usuels de sécurité permettant d'éviter un actionnement involontaire et un déclanchement intempestif du système de commande.

L'invention et ses avantages apparaîtront avec plus de détails dans le cadre de la description qui suit avec des exemples donnés à titre illustratif en référence aux figures annexées qui représentent :
la figure 1, un premier schéma de principe représentatif d'un aéronef conforme à l'invention.
la figure 2, un exemple non revendiqué.

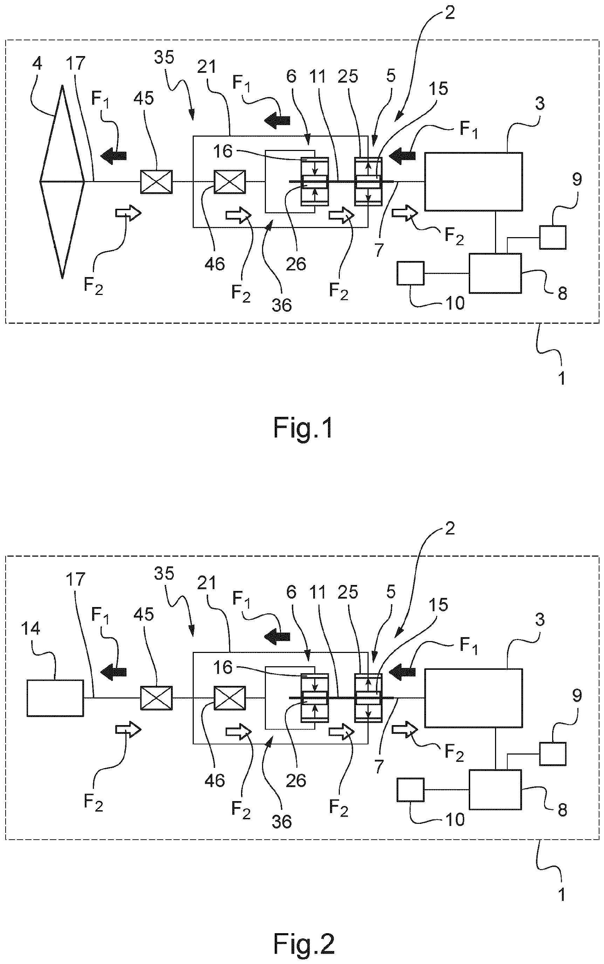

Telle que représentée à la figure 1, l'invention concerne donc un aéronef 1 muni d'une machine électrique 3 et au moins un rotor 4 comportant au moins une pale ou une hélice.

L'aéronef 1 comporte également un système de transmission 2 d'une part d'un couple moteur d'un arbre primaire 7 de cette machine électrique 3 fonctionnant en mode moteur vers un arbre secondaire 17 solidaire en rotation avec le ou les rotors 4 et alternativement d'autre part d'un couple générateur de l'arbre secondaire 17 vers l'arbre primaire 7 de la machine électrique 3 fonctionnant en mode générateur. L'aéronef 1 peut comporter éventuellement plusieurs rotors 4 entraînés par une même machine électrique, par plusieurs machines électriques connectées ensemble par un boîtier de transmission ou individuellement chacun par une machine électrique dédiée.

A des fins de simplification, l'aéronef 1 est décrit par la suite avec un seul rotor 4 et une seule machine électrique 3 sans en limiter la portée de l'invention à cet exemple de réalisation.

En outre, le système de transmission 2 comporte une roue libre moteur 5 agencée en opposition de phase avec une roue libre générateur 6.

De cette manière dans un état synchronisé ou engagé de la roue libre moteur 5, un couple moteur peut être transmis par la roue libre moteur 5 de la machine électrique 3 fonctionnant en moteur vers le rotor 4, la roue libre générateur étant quant à elle désynchronisée ou désengagé.

Alternativement dans un état synchronisé ou engagé de la roue libre générateur, un couple générateur peut être transmis par la roue libre générateur 6 du rotor 4 vers la machine électrique 3 fonctionnant en générateur, la roue libre moteur étant quant à elle désynchronisée ou désengagée.

Par suite, aucun différentiel de vitesse de rotation entre le rotor 4 et la machine électrique 3 ne peut se produire, car à chaque mode moteur ou générateur, au moins une des roues libres moteur 5 et générateur 6 est synchronisée ou engagée entraînant soit le rotor 4 au moyen de la machine électrique 3 fonctionnant en mode moteur, soit la machine électrique 3 fonctionnant en mode générateur au moyen du rotor 4.

La roue libre moteur 5 comporte une partie menante moteur 15 solidaire en rotation de l'arbre primaire arbre 7 de la machine tournante 3.

Un système de liaison en rotation, comportant par exemple des billes ou des galets, permet alors de lier en rotation la partie menante moteur 15 avec une partie menée moteur 25 dans l'état synchronisé ou engagé.

Le système de transmission 2 comporte alors également un dispositif de transmission moteur 35 configuré pour transmettre le couple moteur de la partie menée moteur 25 à l'arbre secondaire 17.

En outre, un tel dispositif de transmission moteur 35 comporte une portion fusible moteur 45 présentant une limite à la rupture moteur prédéterminée. Cette portion fusible moteur 45 est en effet configurée pour casser lorsque le couple moteur transmis est supérieur à une valeur de seuil prédéterminée ou lorsque le couple résistif par exemple de freinage ou de blocage de la roue libre moteur 5 dépasse une valeur de seuil prédéterminée.

Le système de transmission 2 comporte alors également un dispositif de transmission générateur 36 pour transmettre le couple générateur du rotor 4 vers une partie menante générateur 16 de la roue libre générateur 6.

Cette roue libre générateur 6 comporte également une partie menée générateur 26 solidaire en rotation d'un organe de liaison 11. En outre, un tel organe de liaison 11 peut être un élément indépendant ou selon une autre variante former un ensemble monolithique comportant à la fois la partie menante moteur 15 et la partie menée générateur 26.

De manière analogue, la partie menée moteur 25 est solidaire en rotation d'un organe de liaison 21. En outre, un tel organe de liaison 21 peut être un élément indépendant ou selon une autre variante former un ensemble monolithique comportant à la fois la partie menée moteur 25 et la partie menante générateur 16.

Un système de liaison en rotation comportant par exemple des billes ou des galets permet alors de lier en rotation la partie menante générateur 16 avec la partie menée générateur 26 dans l'état synchronisé ou engagé.

En outre, un tel dispositif de transmission générateur 36 comporte une portion fusible générateur 46 présentant une limite à la rupture générateur prédéterminée. Cette portion fusible générateur 46 est en effet configurée pour casser lorsque le couple générateur transmis est supérieur à une valeur de seuil prédéterminée ou lorsque le couple résistif par exemple de freinage ou de blocage de la machine électrique 3 et donc transmis à la roue libre générateur 6 dépasse une valeur de seuil prédéterminée. Un tel couple résistif de freinage peut en outre consister en la différence entre le couple moteur et le couple générateur.

Par ailleurs, l'aéronef 1 comporte un système de commande 8 permettant de piloter éventuellement un blocage de la machine électrique 3. Ce couple de freinage de la machine électrique 3 peut générer une rupture de la portion fusible générateur 46. En outre, un système de commande 8 peut intégrer des moyens de sécurité aptes à se prémunir d'un éventuel déclanchement involontaire et/ou accidentel.

Un tel système de commande 8 permet alors par exemple de générer un ordre de commande forçant la fermeture des transistors de l'électronique de puissance de la machine électrique 3 afin de créer un couple résistant important provoqué par un court-circuitage de toutes les phases permettant la génération d'un court-circuit de la machine électrique 3 fonctionnant en mode générateur.

Le système de commande 8 peut comprendre un écran de contrôle et une unité de traitement comportant par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

L'aéronef 1 comporte également au moins un senseur 9 pour détecter une panne de l'aéronef 1, le senseur 9 est alors relié manière filaire ou non filaire au système de commande 8 pour commander automatiquement le couple de freinage de la machine électrique 3.

Un tel senseur 9 peut par exemple mesurer un signal électrique et permettre de détecter une surtension électrique ou un court-circuit électrique. Selon une autre variante, le senseur 9 peut également mesurer une température et détecter une élévation importante de cette mesure. Le signal électrique mesuré, ou une information générée à partir de ce signal électrique, est alors transmis au système de commande 8 qui peut éventuellement analyser le signal électrique et générer, en fonction de l'analyse de ce signal, un ordre de couple de freinage automatique de la machine électrique 3.

De façon complémentaire ou alternative, l'aéronef 1 peut aussi comporter au moins un organe de commande 10 pour générer une consigne de commande. Un tel organe de commande 10 peut par exemple comporter un bouton ou une dalle tactile de manière à être actionné manuellement par un pilote de l'aéronef 1.

Cet organe de commande 10 est alors également relié de manière filaire ou non filaire au système de commande 8 pour permettre, si nécessaire, de commander manuellement le couple de freinage de la machine électrique 3.

Eventuellement, une redondance de senseurs 9 et/ou d'organes de commande 10 peuvent également participer aux moyens de sécurité aptes à se prémunir d'un éventuel déclanchement involontaire et/ou accidentel.

Tel que représenté à la figure 1 par les flèches F1, dans une première phase de fonctionnement, la machine électrique 3 fonctionne en mode moteur et génère un couple moteur. Ce couple moteur est transmis de la machine électrique 3 à la roue libre moteur 5. La roue libre moteur 5 est alors activée et la partie menante 15 entraîne en rotation la partie menée 25 car le différentiel de vitesse entre la partie menante 15 et la partie menée 25 est supérieur ou égal à 0. La roue libre générateur 6 est quant à elle désactivée ou glissante car agencée en opposition de phase car le différentiel de vitesse entre la partie menante 16 et la partie menée 26 est inférieur ou égal à 0.

Dés lors, la partie menée 25 entraîne en rotation la portion fusible moteur 45 dimensionnée pour transmettre le couple moteur supérieur au couple générateur en prenant éventuellement en compte un coefficient de sécurité. La portion fusible moteur 45 entraîne alors ensuite en rotation le rotor 4.

Tel que représenté par les flèches F2, dans une seconde phase de fonctionnement distincte de la première phase de fonctionnement, le rotor 4 génère le couple générateur qui est inférieur au couple moteur. Le rotor 4 entraîne en rotation la portion fusible générateur 46 dimensionnée pour résister au couple générateur avec un coefficient de sécurité. Le couple générateur est alors transmis à la roue libre générateur 6.

Ainsi, la roue libre générateur 6 est activée car le différentiel de vitesse entre la partie menante 16 et la partie menée 26 est supérieur ou égal à 0 et la roue libre moteur 5 est quant à elle désactivée ou glissante car le différentiel de vitesse entre la partie menante 15 et la partie menée 25 est inférieur ou égal à 0, la roue libre moteur 5 étant agencée en opposition de phase avec roue libre générateur 6. La partie menante 16 entraîne en rotation la partie menée 26 et l'organe de liaison 11. Cet organe de liaison 11 entraîne quant à lui l'arbre 7 de la machine électrique 3 fonctionnant en mode générateur.

Dés, lors si un couple résistant est généré par la machine électrique 3 au moyen d'un court-circuit ou si ce couple résistant est transmis à la machine électrique 3 au moyen d'un freinage mécanique, la roue libre moteur 5 est désactivée et seule la roue libre générateur 6 est activée tant que le couple générateur transmis à l'arbre secondaire 17 ne sollicite pas la portion fusible générateur 46 au-delà de sa limite à la rupture. En outre, un tel agencement permet de minimiser les contraintes sur l'arbre secondaire 17 car le couple générateur ne peut dépasser une valeur de seuil fonction de la limite à la rupture prédéterminée de la portion fusible générateur 46.

Dans ce cas, le senseur 9 peut permettre de détecter le couple résistant généré par la machine électrique 3 ou encore de détecter une élévation de température issue d'une perte thermique anormale et transmettre cette information au système de commande 8.

Si le couple générateur transmis à l'arbre secondaire 17 dépasse une valeur de seuil, la portion fusible générateur 46 se casse permettant donc de libérer l'arbre secondaire 17 du couple de freinage transmis à l'arbre primaire 7 de la machine électrique 3 et par suite le couple résistant n'est plus transmis à l'arbre secondaire 17.

De la même manière, l'arbre secondaire 17 ne transmet plus de couple générateur à l'arbre primaire de la machine électrique 3 fonctionnant en mode générateur. Un tel couple de freinage électromagnétique peut être appliqué pour par exemple éviter un risque d'incendie de l'aéronef.

Tel que représenté à la figure 2, un autre exemple non revendiqué concerne un aéronef 1 muni d'une machine électrique 3 et au moins un moteur thermique 14.

Cet exemple se rapporte également à un système de transmission 2 d'une part d'un couple moteur d'un arbre primaire de cette machine électrique 3 fonctionnant en mode moteur vers un arbre secondaire solidaire en rotation avec le ou les moteurs thermiques 14 et alternativement d'autre part d'un couple générateur de l'arbre secondaire vers la machine électrique 3 fonctionnant en mode générateur. L'aéronef 1 est donc également muni d'un système de transmission 2 et peut comporter éventuellement plusieurs moteurs thermiques 14 entraînés par une même machine électrique, par plusieurs machines électriques connectées ensemble par un boîtier de transmission ou individuellement chacun par une machine électrique dédiée.

A des fins de simplification, l'aéronef 1 est ainsi illustré avec un seul moteur thermique 14 et une seule machine électrique 3 sans en limiter la portée de l'invention à cet exemple de réalisation.

En outre, un tel moteur thermique 14 peut un moteur à un ou plusieurs pistons, un moteur rotatif ou encore un turbomoteur. Dans ce cas, l'arbre secondaire 17 peut alors être solidaire en rotation d'un arbre d'un générateur de gaz du turbomoteur.

Dans ce cas, si le différentiel de couple entre un couple de freinage de la machine électrique 3 et le couple absorbé par un moteur thermique 14 dépasse une autre valeur de seuil, la portion fusible moteur 45 peut se casser permettant donc de libérer le moteur thermique 14 de la machine électrique 3. Un tel couple de freinage peut être d'origine électromagnétique ou mécanique appliqué à la machine électrique 3 et par suite le couple de freinage n'est plus transmis au moteur thermique 14.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) comportant au moins une machine électrique (3) présentant un arbre primaire (7), ledit aéronef (1) comportant un arbre secondaire (17) et au moins un rotor (4) participant à une sustentation et/ou à une propulsion dudit aéronef (1) dans l'air, ledit aéronef (1) comportant un système de transmission (2) d'une part d'un couple moteur dudit arbre primaire (7) de ladite au moins une machine électrique (3) fonctionnant en mode moteur vers ledit arbre secondaire (17) et alternativement d'autre part d'un couple générateur dudit arbre secondaire (17) vers ledit arbre primaire (7) de ladite au moins une machine électrique (3) fonctionnant en mode générateur,
**caractérisé en ce que** ledit arbre secondaire (17) est solidaire en rotation dudit au moins un rotor (4) et **en ce que** ledit système (2) comporte deux roues libres (5, 6) agencées en opposition de phase, lesdites deux roues libres (5, 6) présentant :
• une roue libre moteur (5), ladite roue libre moteur (5) comportant une partie menante moteur (15) solidaire en rotation avec ledit arbre primaire (7) et une partie menée (25) solidaire en rotation avec ledit arbre secondaire (17), ladite roue libre moteur (5) transmettant exclusivement ledit couple moteur dudit arbre primaire (7) vers ledit arbre secondaire (17), et
• une roue libre générateur (6), ladite roue libre générateur (6) comportant une partie menante générateur (16) solidaire en rotation avec ledit arbre secondaire (17) et une partie menée générateur (26) solidaire en rotation avec ledit arbre primaire (7), ladite roue libre générateur (6) transmettant exclusivement ledit couple générateur dudit arbre secondaire (17) vers ledit arbre primaire (7).

2. Aéronef selon la revendication 1,
**caractérisé en ce que** la partie menante moteur et la partie menée générateur forment un premier ensemble monolithique.

3. Aéronef selon l'une quelconque des revendications 1 à 2,
**caractérisé en ce que** la partie menante générateur et la partie menée moteur forment un second ensemble monolithique.

4. Aéronef selon l'une quelconque des revendications 1 à 3,
**caractérisé en ce que** ledit système (2) comporte un dispositif de transmission générateur (36) transmettant ledit couple générateur dudit arbre secondaire (17) vers ladite partie menante générateur (16).

5. Aéronef selon la revendication 4,
**caractérisé en ce que** ledit dispositif de transmission générateur (36) comporte une portion fusible générateur (46), ladite portion fusible générateur (46) présentant une limite à la rupture générateur prédéterminée.

6. Aéronef selon l'une quelconque des revendications 1 à 5,
**caractérisé en ce que** ledit système (2) comporte un dispositif de transmission moteur (35) transmettant ledit couple moteur de ladite partie menée moteur (25) vers ledit arbre secondaire (17).

7. Aéronef selon la revendication 6,
**caractérisé en ce que** ledit dispositif de transmission moteur (35) comporte une portion fusible moteur (45), ladite portion fusible moteur (45) présentant une limite à la rupture moteur prédéterminée.

8. Aéronef selon l'une quelconque des revendications 1 à 7,
**caractérisé en ce que** ledit système (2) comporte un dispositif de transmission générateur (36) transmettant ledit couple générateur dudit arbre secondaire (17) vers ladite partie menante générateur (16) et un dispositif de transmission moteur (35) transmettant ledit couple moteur de ladite partie menée moteur (25) vers ledit arbre secondaire (17), ledit dispositif de transmission générateur (36) étant solidaire en rotation avec ledit dispositif de transmission moteur (35).

9. Aéronef selon la revendication 8,
**caractérisé en ce que** ledit dispositif de transmission générateur (36) comporte une portion fusible générateur (46) et ledit dispositif de transmission moteur (35) comporte une portion fusible moteur (45), ladite portion fusible moteur (45) étant interposée entre ledit arbre secondaire (17) et ladite portion fusible générateur (46).

10. Aéronef selon l'une quelconque des revendications 1 à 9,
**caractérisé en ce que** ledit aéronef (1) comporte un système de commande (8) commandant un couple de freinage de ladite machine électrique (3).

11. Aéronef selon la revendication 10,
**caractérisé en ce que**, ladite roue libre générateur (6) comportant une partie menante générateur (16) solidaire en rotation avec un dispositif de transmission générateur (36) transmettant ledit couple générateur dudit arbre secondaire (17) vers ladite partie menante générateur (16), ledit dispositif de transmission générateur (36) comportant une portion fusible générateur (46), ledit couple de freinage de ladite machine électrique (3) génère une rupture de ladite portion fusible générateur (46).

12. Aéronef selon l'une quelconque des revendications 10 à 11,
**caractérisé en ce que** ledit aéronef (1) comporte au moins un senseur (9) pour détecter une panne dudit aéronef (1), ledit senseur (9) étant relié audit système de commande (8) pour commander automatiquement ledit couple de freinage de ladite machine électrique (3).

13. Aéronef selon l'une quelconque des revendications 10 à 12,
**caractérisé en ce que** ledit aéronef (1) comporte au moins un organe de commande (10) pour générer une consigne de commande, ledit au moins un organe de commande (10) étant actionné manuellement par un pilote dudit aéronef (1) et étant relié audit système de commande (8) pour commander manuellement ledit couple de freinage de ladite machine électrique (3).

## Patentansprüche

1. Luftfahrzeug (1) mit mindestens einer elektrischen Maschine (3), die eine Primärwelle (7) aufweist, wobei das Luftfahrzeug (1) eine Sekundärwelle (17) und mindestens einen Rotor (4) aufweist, der an Auftrieb und/oder Vortrieb des Luftfahrzeugs (1) in der Luft beteiligt ist, wobei das Luftfahrzeug (1) ein System zur Übertragung (2) einerseits eines Antriebsmoments von der Primärwelle (7) der im Motormodus arbeitenden mindestens einen elektrischen Maschine (3) auf die Sekundärwelle (17) und alternativ andererseits eines Generatormoments von der Sekundärwelle (17) auf die Primärwelle (7) der im Generatormodus arbeitenden mindestens einen elektrischen Maschine (3) aufweist,
**dadurch gekennzeichnet, dass** die Sekundärwelle (17) drehfest mit dem mindestens einen Rotor (4) verbunden ist und dass das System (2) zwei Freiläufe (5, 6) umfasst, die gegenphasig angeordnet sind, wobei die beiden Freiläufe (5, 6) aufweisen:
- einen Motorfreilauf (5), wobei der Motorfreilauf (5) einen motorseitigen Antriebsabschnitt (15), der drehfest mit der Primärwelle (7) verbunden ist, und einen Abtriebsabschnitt (25), der drehfest mit der Sekundärwelle (17) verbunden ist, umfasst, wobei der Motorfreilauf (5) ausschließlich das Antriebsmoment von der Primärwelle (7) auf die Sekundärwelle (17) überträgt, und
- einen Generatorfreilauf (6), wobei der Generatorfreilauf (6) einen generatorseitigen Antriebsabschnitt (16), der drehfest mit der Sekundärwelle (17) verbunden ist, und einen generatorseitigen Abtriebsabschnitt (26), der drehfest mit der Primärwelle (7) verbunden ist, umfasst, wobei der Generatorfreilauf (6) ausschließlich das Generatordrehmoment von der Sekundärwelle (17) auf die Primärwelle (7) überträgt.

2. Luftfahrzeug nach Anspruch 1,
**dadurch gekennzeichnet, dass** der motorseitige Antriebsabschnitt und der generatorseitige Abtriebsabschnitt eine erste monolithische Einheit bilden.

3. Luftfahrzeug nach einem der Ansprüche 1 bis 2,
**dadurch gekennzeichnet, dass** der generatorseitige Antriebsabschnitt und der motorseitige Abtriebsabschnitt eine zweite monolithische Einheit bilden.

4. Luftfahrzeug nach einem der Ansprüche 1 bis 3,
**dadurch gekennzeichnet, dass** das System (2) eine Generatorübertragungsvorrichtung (36) umfasst, die das Generatordrehmoment von der Sekundärwelle (17) auf den generatorseitigen Antriebsabschnitt(16) überträgt.

5. Luftfahrzeug nach Anspruch 4,
**dadurch gekennzeichnet, dass** die Generatorübertragungsvorrichtung (36) einen Generatorsicherungsabschnitt (46) aufweist, wobei der Generatorsicherungsabschnitt (46) eine vorgegebene Generatorbruchgrenze aufweist.

6. Luftfahrzeug nach einem der Ansprüche 1 bis 5,
**dadurch gekennzeichnet, dass** das System (2) eine Motorübertragungsvorrichtung (35) umfasst, die das Motordrehmoment von dem motorseitigen Abtriebsabschnitt (25) auf die Sekundärwelle (17) überträgt.

7. Luftfahrzeug nach Anspruch 6,
**dadurch gekennzeichnet, dass** die Motorübertragungsvorrichtung (35) einen Motorsicherungsabschnitt (45) aufweist, wobei der Motorsicherungsabschnitt (45) eine vorgegebene Motorbruchgrenze aufweist.

8. Luftfahrzeug nach einem der Ansprüche 1 bis 7,
**dadurch gekennzeichnet, dass** das System (2) eine Generatorübertragungsvorrichtung (36), die das Generatordrehmoment von der Sekundärwelle (17) auf den generatorseitigen Antriebsabschnitt (16) überträgt, und eine Motorübertragungsvorrichtung (35), die das Motordrehmoment von dem motorseitigen Antriebsabschnitt (25) auf die Sekundärwelle (17) überträgt, umfasst, wobei die Generatorübertragungsvorrichtung (36) drehfest mit der Motorübertragungsvorrichtung (35) verbunden ist.

9. Luftfahrzeug nach Anspruch 8,
**dadurch gekennzeichnet, dass** die Generatorübertragungsvorrichtung (36) einen Generatorsicherungsabschnitt (46) aufweist und die Motorübertragungsvorrichtung (35) einen Motorsicherungsabschnitt (45) aufweist, wobei der Motorsicherungsabschnitt (45) zwischen der Sekundärwelle (17) und dem Generatorsicherungsabschnitt (46) eingefügt ist.

10. Luftfahrzeug nach einem der Ansprüche 1 bis 9,
**dadurch gekennzeichnet, dass** das Luftfahrzeug (1) ein Steuersystem (8) aufweist, das ein Bremsmoment der elektrischen Maschine (3) steuert.

11. Luftfahrzeug nach Anspruch 10,
**dadurch gekennzeichnet, dass** der Generatorfreilauf (6) einen Generatorantriebsabschnitt (16) umfasst, der drehfest mit einer Generatorübertragungsvorrichtung (36) verbunden ist, die das Generatordrehmoment von der Sekundärwelle (17) zum Generatorantriebsabschnitt (16) überträgt, wobei die Generatorübertragungsvorrichtung (36) einen Generatorsicherungsabschnitt (46) umfasst, wobei das Bremsmoment der elektrischen Maschine (3) einen Bruch des Generatorsicherungsabschnitts (46) bewirkt.

12. Luftfahrzeug nach einem der Ansprüche 10 bis 11,
**dadurch gekennzeichnet, dass** das Luftfahrzeug (1) mindestens einen Sensor (9) zum Erkennen einer Störung des Luftfahrzeugs (1) aufweist, wobei der Sensor (9) mit dem Steuersystem (8) verbunden ist, um das Bremsmoment der elektrischen Maschine (3) automatisch zu steuern.

13. Luftfahrzeug nach einem der Ansprüche 10 bis 12,
**dadurch gekennzeichnet, dass** das Luftfahrzeug (1) mindestens ein Steuerorgan (10) zum Erzeugen eines Steuerbefehls aufweist, wobei das mindestens eine Steuerorgan (10) von einem Piloten des Luftfahrzeugs (1) manuell betätigt wird und mit dem Steuersystem (8) verbunden ist, um das Bremsmoment der elektrischen Maschine (3) manuell zu steuern.

## Claims

1. Aircraft (1) comprising at least one electric machine (3) having a primary shaft (7), said aircraft (1) comprising a secondary shaft (17) and at least one rotor (4) contributing to the lift and/or propulsion of said aircraft (1) in the air, said aircraft (1) comprising a transmission system (2) on the one hand for transmitting a driving torque from said primary shaft (7) of said at least one electric machine (3) operating in motor mode to said secondary shaft (17) and, alternatively, on the other hand, for transmitting a generating torque from said secondary shaft (17) to said primary shaft (7) of said at least one electric machine (3) operating in generator mode,
**characterized in that** said secondary shaft (17) is rotatably conjoined to said at least one rotor (4), and **in that** said system (2) comprises two freewheels (5, 6) arranged in phase opposition, said two freewheels (5, 6) having:
• a motor freewheel (5), said motor freewheel (5) comprising a driving motor part (15) rotatably conjoined to said primary shaft (7) and a driven part (25) rotatably conjoined to said secondary shaft (17), said motor freewheel (5) exclusively transmitting said driving torque from said primary shaft (7) to said secondary shaft (17), and
• a generator freewheel (6), said generator freewheel (6) comprising a driving generator part (16) rotatably conjoined to said secondary shaft (17) and a driven generator part (26) rotatably conjoined to said primary shaft (7), said generator freewheel (6) exclusively transmitting said generating torque from said secondary shaft (17) to said primary shaft (7).

2. Aircraft according to Claim 1,
**characterized in that** the driving motor part and the driven generator part form a first monolithic assembly.

3. Aircraft according to any one of Claims 1 to 2,
**characterized in that** the driving generator part and the driven motor part form a second monolithic assembly.

4. Aircraft according to any one of Claims 1 to 3,
**characterized in that** said system (2) comprises a generator transmission device (36) transmitting said generating torque from said secondary shaft (17) to said driving generator part (16).

5. Aircraft according to Claim 4,
**characterized in that** said generator transmission device (36) comprises a generator fusible portion (46), said generator fusible portion (46) having a predetermined generator rupture limit.

6. Aircraft according to any one of Claims 1 to 5,
**characterized in that** said system (2) comprises a motor transmission device (35) transmitting said motor torque from said driven motor part (25) to said secondary shaft (17).

7. Aircraft according to Claim 6,
**characterized in that** said motor transmission device (35) comprises a motor fusible portion (45), said motor fusible portion (45) having a predetermined motor rupture limit.

8. Aircraft according to any one of Claims 1 to 7,
**characterized in that** said system (2) comprises a generator transmission device (36) transmitting said generating torque from said secondary shaft (17) to said driving generator part (16) and a motor transmission device (35) transmitting said motor torque from said driven motor part (25) to said secondary shaft (17), said generator transmission device (36) being rotatably conjoined to said motor transmission device (35).

9. Aircraft according to Claim 8,
**characterized in that** said generator transmission device (36) comprises a generator fusible portion (46) and said motor transmission device (35) comprises a motor fusible portion (45), said motor fusible portion (45) being interposed between said secondary shaft (17) and said generator fusible portion (46).

10. Aircraft according to any one of Claims 1 to 9,
**characterized in that** said aircraft (1) comprises a control system (8) controlling a braking torque of said electric machine (3).

11. Aircraft according to Claim 10,
**characterized in that**, said generator freewheel (6) comprising a driving generator part (16) rotatably conjoined to a generator transmission device (36) transmitting said generating torque from said secondary shaft (17) to said driving generator part (16), said generator transmission device (36) comprising a generator fusible portion (46), said braking torque of said electric machine (3) generates a rupture of said generator fusible portion (46).

12. Aircraft according to any one of Claims 10 to 11,
**characterized in that** said aircraft (1) comprises at least one sensor (9) for detecting a failure of said aircraft (1), said sensor (9) being connected to said control system (8) to automatically control said braking torque of said electric machine (3).

13. Aircraft according to any one of Claims 10 to 12,
**characterized in that** said aircraft (1) comprises at least one control member (10) for generating a control setpoint, said at least one control member (10) being manually operated by a pilot of said aircraft (1) and being connected to said control system (8) to manually control said braking torque of said electric machine (3).
